# FASCICULE DE BREVET EUROPEEN

(11) **EP 3 870 818 B1**
(45) Date de publication et mention de la délivrance du brevet: **17.01.2024**
(21) Numéro de dépôt: 19790663.9
(22) Date de dépôt: 18.09.2019
(51) Int. Cl.: F01P 7/10, F01P 11/16, B60K 11/08, B60K 11/02, F01P 9/06, B60K 1/00, B60H 1/00

(54) **PROCÉDÉ DE REFROIDISSEMENT D'UN ÉQUIPEMENT D'UN VÉHICULE ET VÉHICULE COMPRENANT CET ÉQUIPEMENT**
VERFAHREN ZUM KÜHLEN EINES AUSRÜSTUNGSTEILS EINES FAHRZEUGS UND FAHRZEUG MIT DIESER AUSRÜSTUNG
METHOD FOR COOLING A PIECE OF EQUIPMENT OF A VEHICLE AND VEHICLE COMPRISING THIS EQUIPMENT

(30) Priorité: 22.10.2018 FR 1859725
(43) Date de publication de la demande: 01.09.2021
(73) Titulaire: Stellantis Auto SAS, 78300 Poissy (FR)
(72) Inventeur: MIQUEL, Claire, 95220 HERBLAY (FR); CHARDEL, Fabrice, 94550 CHEVILLY LARUE (FR); ROUF, Hugo, 25200 GRAND CHARMONT (FR)
(86) Numéro de dépôt international: PCT/FR2019/052169
(87) Numéro de publication internationale: WO 2020/084209

(56) Documents cités:
- WO-A1-2013/188068
- DE-A1-102017 107 384
- DE-A1-102017 128 276
- US-A1- 2014 297 081
- US-B2- 9 599 050

## Description

L'invention se rapporte à un procédé de refroidissement d'un équipement d'un véhicule, et à ce véhicule, en particulier un véhicule hybride automobile.

L'invention concerne plus particulièrement un procédé pour un dispositif de refroidissement comportant un circuit hydraulique de fluide caloporteur de refroidissement, associé à une pompe de circulation de celui-ci à travers un équipement à refroidir du véhicule et différentes branches du circuit. Des équipements thermiques à refroidir ou à réchauffer du véhicule peuvent être disposés dans les différentes branches du circuit.

Les systèmes de refroidissement sont conçus pour garantir la tenue des équipements aux contraintes thermomécaniques issues de leur fonctionnement. Par ailleurs, des fonctions complémentaires sont mises en oeuvre en plus du refroidissement, pour améliorer le rendement global ou offrir et garantir des prestations aux utilisateurs de véhicules, telles que, par exemple, le chauffage de l'habitacle.

Les systèmes de refroidissement sont dimensionnés à partir des seuls points de fonctionnement à régime maximal et à pleine charge des équipements, par exemple un moteur de traction, et sont donc surdimensionnés dans la majorité des cas d'utilisation des véhicules, mais ce dimensionnement ne prend jamais en compte la défaillance des équipements de commande de refroidissement car cela aboutirait à un dimensionnement disproportionné de ces systèmes de refroidissement. C'est ainsi que, lors d'une détection d'une défaillance d'un équipement de commande de refroidissement, un équipement à refroidir, comme le moteur, passe dans un mode dégradé limitant ses performances, voire devient tout simplement indisponible.

On connait, par exemple, du document US-A-9 599 050, un procédé qui, en cas de détection d'une défaillance sur des volets d'obturation d'air d'un échangeur, agit sur les paramètres de combustion d'un moteur thermique pour protéger un catalyseur de la ligne d'échappement. Un autre document, US2014/297081 A1, divulgue un procédé qui compense une possible défaillance des volets d'obturation.

Ainsi, les paramètres de fonctionnement du moteur ne sont pas optimisés, ce qui entraîne une dégradation des performances de ce dernier.

Le but de l'invention est de remédier à cet inconvénient, notamment en optimisant, en cas de détection d'une défaillance de l'un des équipements de commande de refroidissement, le procédé de refroidissement.

A cet effet, l'invention a pour objet un procédé de refroidissement par un fluide caloporteur pour un premier équipement d'un véhicule automobile, ce procédé régulant le débit du fluide caloporteur d'un système thermique comprenant un second équipement de commande de ce refroidissement, ce procédé comportant une étape de détermination d'une température instantanée du premier équipement, et une étape de régulation du débit du fluide caloporteur en fonction de la température instantanée lorsqu'elle est inférieure à un premier seuil prédéterminé fonction du premier équipement, et une étape de détection d'une défaillance du second équipement, ce procédé étant tel que, en cas de détection de la défaillance, il comprend une étape de surveillance de la température instantanée qui, si elle dépasse un second seuil prédéterminé supérieur au premier seuil, commande le débit du fluide à son maximum jusqu'à ce que la température instantanée descende sous un troisième seuil prédéterminé inférieur au premier seuil.

Ainsi, lorsque la défaillance du second équipement est détectée, entre le premier seuil et le deuxième seuil prédéterminé, le premier équipement n'est pas impacté et peut donc démarrer ou fonctionner de façon optimale. Lorsque la température instantanée de ce premier équipement dépasse le second seuil prédéterminé, le procédé passe d'un mode de commande en régulation du débit du fluide pour atteindre la température cible, à un mode de commande en boucle ouverte imposant le débit maximal du fluide caloporteur jusqu'à ce que la température instantanée descende sous un troisième seuil prédéterminé. Ce procédé permet donc de garder le premier équipement entièrement disponible pour un fonctionnement optimal. Ce fonctionnement étant optimal, l'autonomie du véhicule fonctionnant avec ce premier équipement est également améliorée.

En outre, lorsque le troisième seuil est inférieur au premier seuil et qu'il est atteint à la fin de l'étape de surveillance, cela forme une marge de sécurité ou une réserve de froid permettant de sortir de l'étape de surveillance.

On comprendra par fluide caloporteur d'un système thermique, dans tout le texte de ce document, un fluide à base d'eau comme de l'eau glycolée, à base d'huile, ou encore un gaz, ce fluide parcourant le système thermique. Par exemple, ce système thermique comprend un circuit hydraulique pouvant avoir une ou plusieurs branches, éventuellement reliées entre-elles, le fluide caloporteur parcourant ce circuit hydraulique.

On comprendra par température instantanée dans tout le texte de ce document, une température mesurée ou estimée en continue à l'instant présent.

On comprendra par débit du fluide à son maximum, dans tout le texte de ce document, le débit du fluide maximum possible par le système thermique, tous les actionneurs pilotés de ce système thermique, défaillants ou pas, étant commandés pour favoriser ce débit de fluide. Par exemple, la commande d'une pompe de circulation de ce système thermique à sa puissance maximale, ou encore l'ouverture d'une vanne de restriction du débit de ce fluide, ou encore l'orientation d'une vanne de dérivation du fluide pour augmenter le débit dans ce système thermique.

Avantageusement, ce troisième seuil est inférieur à la température cible lorsqu'il s'agit de ne pas dépasser la température cible, et supérieur à la température cible lorsqu'il s'agit de ne pas être sous la température cible.

Avantageusement, l'étape de détermination de la température instantanée du premier équipement détermine en outre une température cible du premier équipement

Avantageusement, le premier seuil prédéterminé est fonction du premier équipement et de la température cible.

Selon un mode de réalisation de l'invention, le premier équipement est un équipement parmi un premier groupe d'équipements à refroidir, et le second équipement est un équipement parmi un second groupe d'équipements de commande de refroidissement.

On comprendra par équipements à refroidir dans tout le texte de ce document, un équipement ayant une température maximale à ne pas dépasser, tout comme un équipement ayant une température minimale de fonctionnement, ou encore devant fonctionner dans une plage de températures. Cet équipement peut donc être aussi bien à refroidir qu'à réchauffer, par exemple un calculateur, une machine motrice.

On comprendra par équipements de commande de refroidissement, tout équipement participant à l'obtention de la température cible à l'exclusion du premier équipement. A titre d'exemple, on inclura dans cette définition une pompe de circulation du fluide, une vanne de régulation ou de dérivation du fluide, un échangeur air - fluide caloporteur, des volets régulant le débit de l'air de refroidissement de l'échangeur air - fluide caloporteur, un calculateur commandant les volets ou la pompe de circulation, des capteurs de la température ou du débit du fluide.

On notera que les calculateurs peuvent rentrer dans les deux catégories.

Ainsi, même si un équipement de commande de refroidissement est défaillant, le procédé permettra d'exploiter au maximum le premier équipement.

Selon un mode de réalisation de l'invention, l'étape de détermination de la température instantanée et de la température cible du premier équipement est réalisée pour chaque équipement du premier groupe, le procédé déterminant les trois seuils de température et la température cible pour chaque premier équipement, l'étape de détection de la défaillance du second équipement étant réalisée pour chaque équipement du second groupe, la détection de la défaillance de l'un des équipements du second groupe déclenchant l'étape de surveillance pour chacun des équipements du premier groupe.

Ainsi, dès qu'une défaillance est détectée sur l'un des équipements du second groupe, chaque équipement du premier groupe est surveillé par le procédé, ce qui a pour avantage de respecter le second seuil prédéterminé pour chaque équipement du premier groupe et ainsi sécuriser le fonctionnement de tous les équipements du premier groupe tout en autorisant une disponibilité et un fonctionnement optimal de chaque équipement du premier groupe. Quelle que soit l'origine de la défaillance, et quel que soit le ou les équipements défaillants du second groupe, ce procédé autorise la disponibilité maximale et le fonctionnement optimal de chaque équipement du premier groupe.

Selon un mode de réalisation, le véhicule comprend un système de motricité électrique du véhicule, le premier groupe d'équipements comprenant un équipement de puissance du système de motricité électrique.

On comprendra par équipement de puissance, dans tout le texte de ce document, tout équipement transmettant ou transformant de l'énergie pour la motricité électrique du véhicule et refroidi par le fluide caloporteur. A titre d'exemple, on peut citer une machine motrice électrique, un convertisseur de courant pour la machine électrique, un onduleur pour la machine électrique, une transmission ou réducteur ou boîte de vitesses pour la machine électrique, un stockeur d'énergie électrique pour cette machine électrique.

On comprendra par système de motricité électrique du véhicule, dans tout le texte de ce document, tout élément d'une chaine de traction ayant l'électricité comme source d'énergie.

Il est en effet avantageux pour l'environnement que le mode de propulsion bénéficiant de ce procédé, c'est-à-dire dont la disponibilité et l'autonomie sont améliorées, soit un mode dit « propre », c'est-à-dire sans émissions polluantes.

Selon un mode de réalisation de l'invention, le véhicule est un véhicule hybride comprenant une machine motrice thermique.

Selon un mode de réalisation de l'invention, le premier équipement est un équipement de puissance parmi une machine électrique motrice du véhicule, un convertisseur de courant ou onduleur pour cette machine électrique, un stockeur d'énergie pour cette machine électrique, une transmission ou réducteur ou boîte de vitesses pour cette machine électrique.

Selon un mode de réalisation de l'invention, le second équipement est un équipement de commande de refroidissement parmi une pompe de circulation du fluide caloporteur, un groupe moto-ventilateur d'air de refroidissement d'un échangeur air-fluide caloporteur, des volets régulant le débit de l'air de refroidissement, un capteur de température.

L'invention a en outre pour objet un calculateur comprenant les moyens d'acquisition, de traitement par instructions logicielles stockées dans une mémoire ainsi que les moyens de commande requis à mise en oeuvre du procédé précédemment décrit.

L'invention a également pour objet un véhicule hybride comprenant :
- un système de motricité électrique du véhicule comprenant un premier équipement électrique de puissance à refroidir,
- un système thermique contenant un fluide caloporteur refroidissant le premier équipement, ce système thermique comprenant un second équipement de commande de ce refroidissement,
- un calculateur comprenant les moyens d'acquisition, de traitement par instructions logicielles stockées dans une mémoire ainsi que les moyens de commande requis à mise en oeuvre du procédé précédemment décrit.

Selon un mode de réalisation de l'invention, le calculateur est un ensemble de plusieurs calculateurs de contrôle comprenant un premier calculateur de contrôle contrôlant le système de motricité électrique, un deuxième calculateur contrôlant le refroidissement, les instructions logicielles pour la mise en oeuvre de l'étape de détection de la défaillance du second équipement étant stockées dans la mémoire du deuxième calculateur de contrôle, et les instructions logicielles pour la mise en oeuvre de l'étape de de surveillance de la température instantanée du premier équipement étant stockées dans la mémoire du premier calculateur de contrôle.

D'autres caractéristiques, buts et avantages de l'invention apparaîtront à la lecture de la description des exemples de réalisation non limitatifs qui vont suivre, faite en référence aux figures 1 à 6 annexées, qui représentent :
- figure 1 : un système de refroidissement d'un véhicule pour lequel le procédé selon l'invention est applicable,
- figure 2 : une variante du système de refroidissement de la figure 1,
- figure 3 : un logigramme du procédé de refroidissement selon l'invention.
- figure 4 : un chronogramme des températures instantanées avec les différents seuils de température.

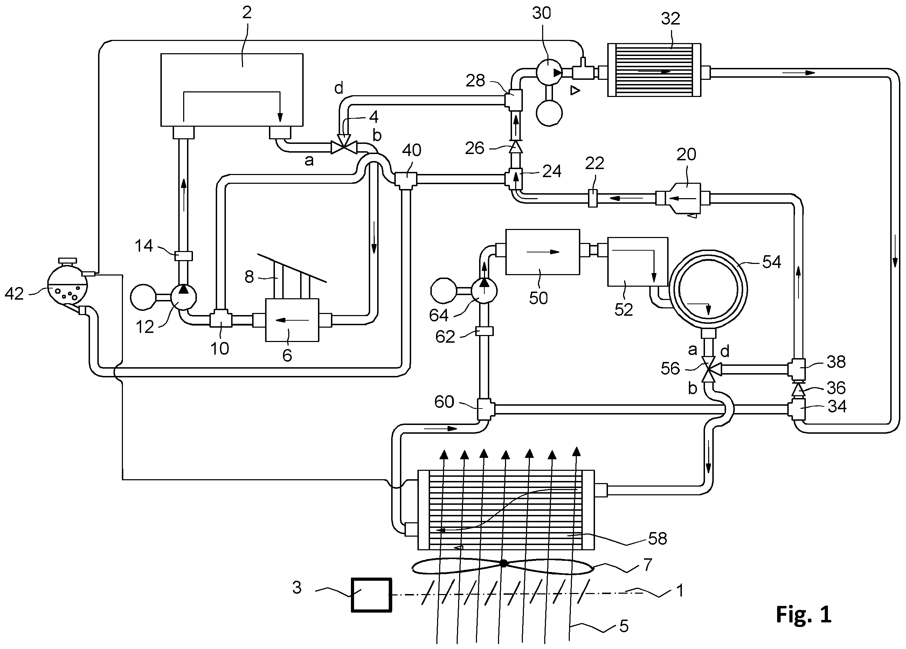

La figure 1 présente un système de refroidissement d'un véhicule hybride comportant un système thermique selon l'invention. Ce système thermique comprend trois circuits thermiques de refroidissement: un premier circuit thermique, ou boucle très basse température comprenant un premier circuit hydraulique de fluide caloporteur, comprenant successivement une batterie de traction 2, dite batterie haute tension, une entrée a et une sortie b d'une première vanne trois voies pilotée 4, un refroidisseur 6 recevant un fluide frigorigène 8, utilisé aussi pour la climatisation de l'habitacle du véhicule, un premier raccord trois branchements 10, une première pompe de circulation 12 actionnée par un moteur électrique, et un premier capteur de température 14.

La boucle très basse température régule la température de la batterie de traction 2 pour la refroidir, notamment pendant les périodes de recharge rapide, ou la réchauffer au démarrage par temps froid afin d'optimiser ses performances ainsi que sa durée de vie.

Un deuxième circuit thermique, ou deuxième boucle haute température, comprend un deuxième circuit hydraulique de fluide caloporteur comportant successivement un réchauffeur électrique 20 recevant un courant haute tension, un deuxième capteur de température 22, un deuxième raccord trois branchements 24, un premier clapet anti-retour 26, un troisième raccord trois branchements 28 comprenant un branchement relié à une sortie d de la première vanne trois voies 4, et un autre branchement relié à une deuxième pompe de circulation 30 de ce deuxième circuit hydraulique actionnée par un moteur électrique.

Ce deuxième circuit hydraulique comporte ensuite un premier échangeur thermique 32 de chauffage de l'habitacle du véhicule, puis un quatrième raccord trois branchements 34, un deuxième clapet anti-retour 36, un cinquième raccord trois branchements 38, et revient enfin au réchauffeur électrique 20.

Le deuxième raccord trois branchements 24 comporte un branchement relié à un sixième raccord trois branchements 40 comprenant un branchement relié au premier raccord trois branchements 10, et un autre branchement relié à un vase d'expansion 42 permettant un dégazage du fluide caloporteur des circuits hydrauliques.

Le troisième circuit thermique, ou troisième boucle basse température comprend un troisième circuit hydraulique de fluide caloporteur, comportant successivement un chargeur embarqué de batterie 50, un onduleur 52, une machine électrique de traction 54 commandée par cet onduleur, une deuxième vanne trois voies pilotée 56, un échangeur thermique avec l'air ambiant 58, disposé à l'avant du véhicule pour dissiper des calories dans l'atmosphère, un septième raccord trois branchements 60, une troisième sonde de température 62, puis une troisième pompe de circulation 64 actionnée par un moteur électrique.

Le quatrième raccord trois branchements 34 comporte un branchement relié au septième raccord trois branchements 60. Le cinquième raccord trois branchements 38 comporte un branchement relié à la deuxième sortie d de la deuxième vanne trois voies 56.

La troisième boucle basse température permet de réguler la température de la machine électrique 54, et de l'électronique de l'onduleur 52 et du chargeur embarqué 50, qui doivent présenter des basses températures de l'ordre de 70 à 80°C.

Chaque vanne trois voies 4, 56 est pilotée pour à partir d'une entrée a, la relier alternativement à une première sortie b ou à une deuxième sortie d, l'autre sortie qui n'est pas utilisée étant isolée.

En disposant la première vanne trois voies 4 dans une position reliant son entrée a venant de la batterie 2 à sa première sortie b vers le refroidisseur 6, on ferme la deuxième sortie d et on isole le premier circuit hydraulique très basse température du deuxième circuit hydraulique haute température. De même en disposant la deuxième vanne trois voies 56 dans une position reliant son entrée a venant de la machine électrique 54 à sa première sortie b vers l'échangeur thermique 58, on ferme la deuxième sortie d et on isole le deuxième circuit hydraulique haute température du troisième circuit hydraulique basse température. Chaque circuit travaille de manière indépendante.

En inversant uniquement la position de la première vanne trois voies 4, le fluide sortant de la batterie 2 part vers le deuxième circuit hydraulique haute température pour être alternativement refroidi dans l'aérotherme 32 ou chauffé dans le réchauffeur 20, le premier clapet anti-retour 26 empêchant un départ du fluide dans l'autre sens dans le deuxième circuit hydraulique haute température. Le retour du fluide passe par le deuxième raccord trois branchements 24, puis vers la première pompe de circulation 12 pour revenir à la batterie 2.

En inversant uniquement la position de la deuxième vanne trois voies 56, le fluide sortant de la machine électrique 54 part vers le deuxième circuit hydraulique haute température pour être refroidi dans l'aérotherme 32, le deuxième clapet anti-retour 36 empêchant un départ du fluide dans l'autre sens dans le deuxième circuit hydraulique haute température. Le retour du fluide passe par le quatrième raccord trois branchements 34 puis par le septième raccord trois branchements 60, pour arriver sur la troisième pompe électrique 64, le chargeur de batterie 50 et l'onduleur 52.

De cette manière on utilise les calories générées par le chargeur de batterie 56, l'onduleur 52 ou la machine électrique 54 suivant ce qui est en fonctionnement, pour alimenter l'aérotherme 32 de chauffage de l'habitacle.

Ces trois circuits hydrauliques peuvent, en variante, être indépendants les uns des autres, et comporter chacun un échangeur thermique avec l'air ambiant, dit radiateur 58.

Le troisième circuit thermique du système thermique comprend en outre un groupe moto-ventilateur 7 et un système de volets obturateurs 1 régulant le flux de l'air de refroidissement schématisé par les flèches 5, et traversant le radiateur 58 par l'effet de poussée du groupe moto-ventilateur 7 ou du mouvement d'avance du véhicule. Ce groupe moto-ventilateur 7 et le système de volets obturateurs 1 sont donc thermiquement en relation avec le troisième circuit hydraulique via le radiateur 58. Ces volets 1 sont actionnés par un module de commande 3 comprenant un moteur électrique et une électronique de commande.

Ce système de volets obturateurs 1 est le plus souvent désigné par l'acronyme AGS, provenant de l'expression de langue anglaise "Active Grille Shutter", et est de préférence installé au niveau d'une calandre du véhicule automobile, et permet un contrôle du flux d'air traversant la face avant du véhicule, y compris le radiateur 58 et un compartiment moteur du véhicule, et comprend un ou plusieurs volets montés parallèlement sur pivot dans un cadre rigide. Le cadre présente une forme générale rectangulaire et délimite l'entrée d'air que les volets ouvrent et ferment.

Bien entendu, l'invention ne se limite pas au seul schéma de la figure 1, et, en particulier, le nombre de volets, d'ensembles de volets et la position des volets les uns relativement aux autres peuvent varier.

Chaque volet est monté pivotant entre une position d'obturation de l'entrée d'air et au moins une position d'ouverture de l'entrée d'air.

La position des volets régule l'efficacité du radiateur 58 : lorsqu'ils sont fermés, l'air de refroidissement ne passe plus, le radiateur 58 ne refroidit plus le fluide caloporteur. A l'inverse, les volets en position d'ouverture maximale permettent au radiateur 58 d'avoir pleinement son effet de refroidissement du fluide caloporteur.

Lorsque les volets se trouvent bloqués, par exemple en position fermée ou obturée, l'électronique de commande du module de commande 3 est apte à émettre un signal électrique indiquant un disfonctionnement des volets 1.

Ce système de volets obturateurs 1 est un équipement de commande de refroidissement, au même titre que le groupe moto-ventilateur 7, le premier 14 et le deuxième 22 capteur de température, les première, deuxième et troisième pompes de circulation 12, 30, 64, les vannes trois voies 4, 56 de régulation. Par analogie avec le système des volets obturateurs 1, chacun de ces équipements de commande a une électronique associée remontant un signal électrique indiquant une défaillance de cet équipement de commande.

On notera que le procédé objet de l'invention, s'applique aussi bien à l'une des trois boucles, qu'à l'ensemble des trois boucles lorsqu'elles sont mises en commun par les vannes trois voies 4, 56. Ces vannes trois voies peuvent également être remplacées par plusieurs vannes deux voies, ou tout autre dispositif ayant la même fonction.

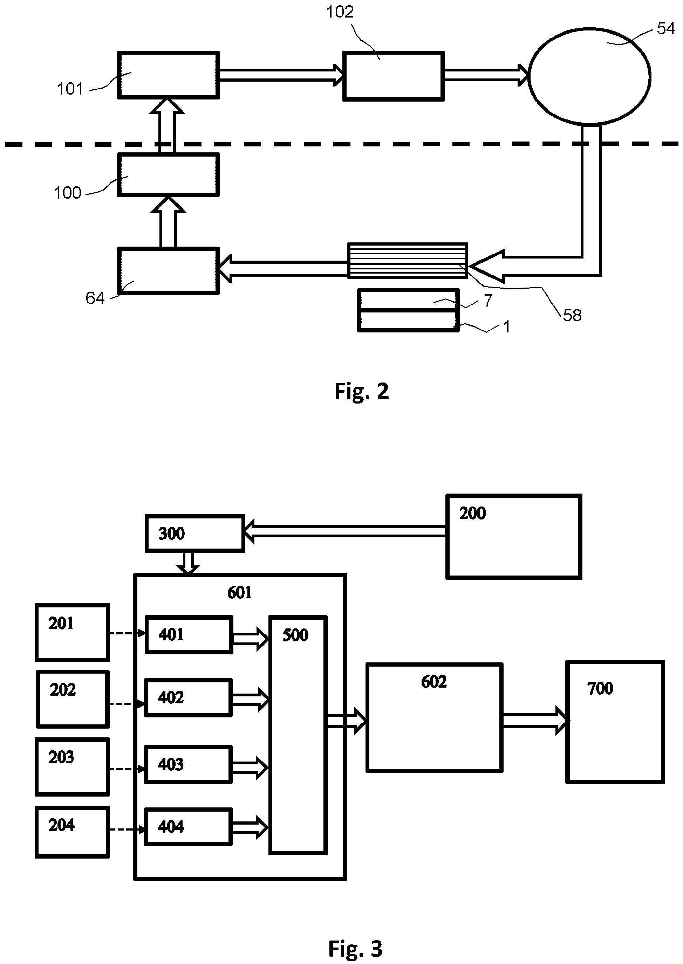

La figure 2 schématise une variante du système de refroidissement de la figure 1, en ne montrant que la troisième boucle basse température.

Cette figure 2 schématise le système de refroidissement pour un véhicule ayant une machine électrique 54 motrice sur un train arrière du véhicule, et étant indépendante des deux autres première et deuxième boucles très basse température et haute température.

Cette troisième boucle basse température comprend successivement le radiateur 58 à l'avant du véhicule et équipé du groupe moto-ventilateur 7 et du système de de volets obturateurs 1, la troisième pompe de circulation 64 permettant de faire circuler le liquide caloporteur du radiateur 58 vers un onduleur 100 à l'avant du véhicule, puis vers un convertisseur de courant 101, puis vers un onduleur 102 à l'arrière du véhicule, puis vers la machine électrique de traction 54 située à l'arrière du véhicule, avant de revenir dans le radiateur 58. La séparation entre la partie avant et arrière du véhicule est schématisée par le trait en pointillés, le radiateur 58 étant dans la partie avant du véhicule.

Les équipements communs à la figure 1 portent la même référence, mais font partie dans la figure 2 d'un circuit différent.

Ce convertisseur 101 est, par exemple, un convertisseur continu-continu utilisé pour la conversion de la tension entre une batterie haute tension comme la batterie de traction 2, et une batterie basse tension comme une batterie de servitude (non représentée), et intègre en outre un chargeur embarqué, couramment désigné par l'homme du métier sous l'acronyme OBC pour « On Board Charger » en anglais, utilisé pour la recharge de la batterie haute tension.

Un premier calculateur de contrôle (non représenté) contrôle le système de motricité électrique comprenant les équipements de puissance qui sont dans cet exemple l'onduleur 100, le convertisseur de courant 101, l'onduleur 102 à l'arrière du véhicule, et la machine électrique de traction 54.

Un deuxième calculateur de contrôle (non représenté) contrôle le système de refroidissement de la boucle basse température en contrôlant les équipements de commande de refroidissement qui dans cet exemple sont la pompe de circulation 64, le groupe moto-ventilateur 7 et le système de de volets obturateurs 1. Ce deuxième calculateur est par exemple embarqué dans l'un des équipements de puissance à refroidir, notamment le convertisseur de courant 101.

En variante, le groupe moto-ventilateur 7 et le système de de volets obturateurs 1 sont contrôlés par un troisième calculateur (non représenté) dit CMM, qui contrôle une machine thermique motrice (non représentée), le véhicule étant un véhicule hybride et ayant un quatrième calculateur supervisant le premier et le troisième calculateur et déterminant, entre autres, une répartition de couple moteur entre les différentes machines motrices.

Ces calculateurs comprennent les moyens d'acquisition, de traitement par instructions logicielles stockées dans une mémoire ainsi que les moyens de commande requis à mise en oeuvre du procédé selon l'invention, tel que décrit ci-dessous.

La figure 3 est un logigramme du procédé de refroidissement selon l'invention et divulgue un procédé de refroidissement par un fluide caloporteur pour un premier équipement du véhicule automobile, ce procédé régulant le débit du fluide caloporteur d'un système thermique, par exemple l'une ou les trois boucles en combinaison telles qu'illustrées en figure 1 ou figure 2. Ce système thermique comprend un second équipement de commande de ce refroidissement, distinct du premier équipement. Ce procédé comporte une étape 201, 202, 203, 204 de détermination d'une température instantanée t₂₀₁, t₂₀₂, t₂₀₃, t₂₀₄ et d'une température cible T201, T202, T203, T204 du premier équipement, et une étape de régulation du débit du fluide caloporteur (non représentée) en fonction de la température instantanée lorsqu'elle est inférieure à un premier seuil S11, S12, S13, S14 prédéterminé fonction du premier équipement et de la température cible T201, T202, T203, T204 , et une étape de détection d'une défaillance 200 du second équipement. En cas de détection de la défaillance, le procédé comprend une étape de surveillance 601 de la température instantanée t₂₀₁, t₂₀₂, t₂₀₃, t₂₀₄ qui comprend une étape de test 401, 402, 403, 404 consistant à comparer cette température instantanée t₂₀₁, t₂₀₂, t₂₀₃, t₂₀₄ à un second seuil prédéterminé S21, S22, S23, S24, et si elle dépasse ce second seuil prédéterminé qui est supérieur au premier seuil, elle établit une information de surchauffe 602 qui déclenche par une étape de commande 700 le débit du fluide à son maximum jusqu'à ce que la température instantanée t₂₀₁, t₂₀₂, t₂₀₃, t₂₀₄ descende sous un troisième seuil prédéterminé S31, S32, S33, S34 inférieur ou égal au premier seuil S11, S12, S13, S14.

Lorsqu'il y a plusieurs premiers équipements, par exemple les quatre premiers équipements de cette figure 3, il y a alors quarte étapes de test 401, 402, 403, 404 correspondant à chacun des quatre premiers équipements. L'étape de surveillance 601 comprend alors une étape supplémentaire de convergence 500 permettant de construire l'information de surchauffe 602. Cette étape de convergence 500 consiste par exemple à créer une fonction logique de type « ou » entre les quatre étapes de test 401, 402, 403, 404, c'est-à-dire que si l'une au moins des quatre températures instantanées t₂₀₁, t₂₀₂, t₂₀₃, t₂₀₄ dépasse respectivement l'un des quatre seconds seuils prédéterminés S21, S22, S23, S24, l'information de surchauffe 602 est établie.

Dans une variante, cette étape de convergence 500 consiste par exemple à créer une fonction logique de type « ET » entre les quatre étapes de test 401, 402, 403, 404.

Dans une autre variante, cette étape de convergence 500 consiste à créer une combinaison de fonction logique de type « ET » et « OU » entre les quatre étapes de test 401, 402, 403, 404, permettant de prioriser certaines étapes de test. Par exemple : si t₂₀₁ est supérieure à S21, ou si t₂₀₂ et t₂₀₃ et t₂₀₄ sont respectivement supérieures à S22, S23, S24, alors l'information de surchauffe 602 est établie. Dans ce cas on priorise clairement la température t₂₀₁.

Dans une variante, une étape de temporisation 300 bloque l'information de défaillance pendant un temps prédéterminé, de sorte à ne pas enclencher l'étape de surveillance 601 si la détection de la défaillance est furtive, c'est-à-dire si l'information détection de défaillance n'est plus vraie à la fin de cette temporisation 300.

Le premier équipement est un équipement parmi un premier groupe d'équipements à refroidir. Comme illustré sur les figures 1 et 2, ces équipements sont par exemple la batterie de traction 2, le refroidisseur 6, le chargeur embarqué de batterie 50, l'onduleur 52, la machine électrique de traction 54, l'électronique de l'onduleur 52, l'onduleur 100 à l'avant du véhicule, le convertisseur de courant 101, l'onduleur 102 à l'arrière du véhicule, l'un des quatre calculateurs.

Le second équipement est un équipement parmi un second groupe d'équipements de commande de refroidissement. Comme illustré sur les figures 1 et 2, ces équipements sont par exemple la première vanne trois voies pilotée 4, la première pompe de circulation 12, le premier capteur de température 14, le deuxième capteur de température 22, la deuxième pompe de circulation 30, la deuxième vanne trois voies pilotée 56, la troisième sonde de température 62, la troisième pompe de circulation 64, le système de volets obturateurs 1, le module de commande 3, le groupe moto-ventilateur 7, ou encore l'un des quatre calculateurs.

L'étape de détermination de la température instantanée et de la température cible du premier équipement est alors réalisée pour chaque équipement du premier groupe, le procédé déterminant les trois seuils de température et la température cible pour chaque premier équipement, l'étape de détection de la défaillance du second équipement étant réalisée pour chaque équipement du second groupe, la détection de la défaillance de l'un des équipements du second groupe déclenchant l'étape de surveillance pour les équipements du premier groupe.

En variante, l'étape de surveillance est déclenchée seulement pour un sous-groupe du premier groupe, ce sous-groupe étant fonction du ou des seconds équipements défaillants.

Dans un exemple de réalisation, le véhicule comprend le système de motricité électrique du véhicule, et le premier groupe d'équipement comprend alors un équipement de puissance du système de motricité électrique. Comme illustré sur les figures 1 et 2, cet équipement de puissance est par exemple la batterie de traction 2, le chargeur embarqué de batterie 50, l'onduleur 52, la machine électrique de traction 54, l'électronique de l'onduleur 52, l'onduleur 100 à l'avant du véhicule, le convertisseur de courant 101, ou l'onduleur 102 à l'arrière du véhicule. Ce véhicule est avantageusement un véhicule hybride comprenant une machine motrice thermique (non représentée), cette machine thermique étant refroidie par la boucle haute température.

Dans une variante non représentée, l'une des boucles de refroidissement, par exemple la boucle haute température, refroidit un équipement de puissance parmi une transmission ou réducteur ou boîte de vitesses pour cette machine électrique 54.

Les instructions logicielles pour la mise en oeuvre du procédé sont réparties entre les calculateurs.

Par exemple, les instructions logicielles pour la mise en oeuvre de l'étape de détection de la défaillance du second équipement sont stockées dans la mémoire du deuxième calculateur de contrôle, alors que les instructions logicielles pour la mise en oeuvre de l'étape de de surveillance de la température instantanée du premier équipement sont stockées dans la mémoire du premier calculateur de contrôle.

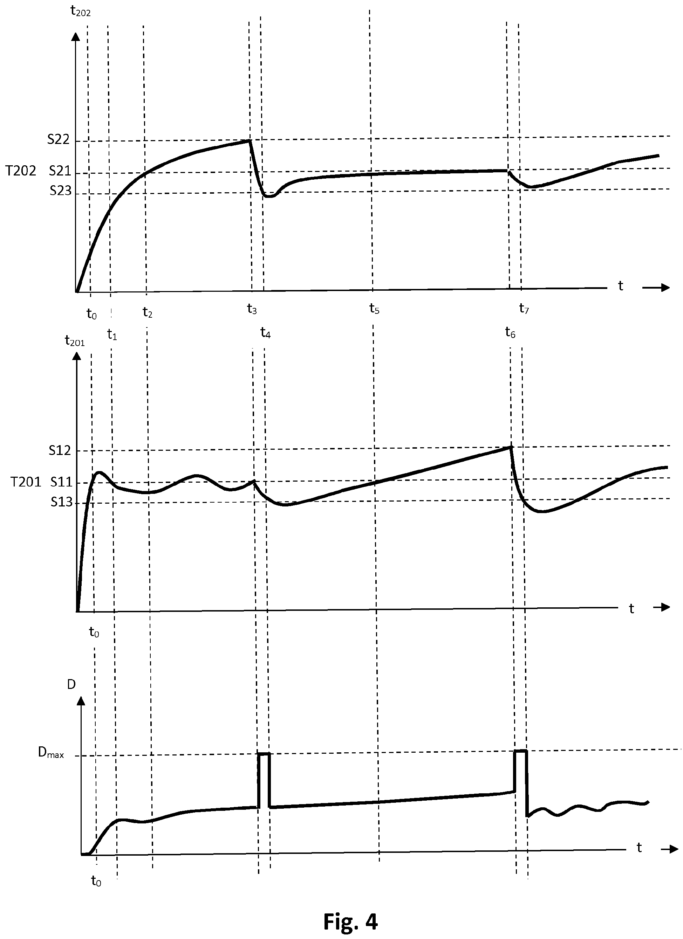

La figure 4 illustre un chronogramme des températures instantanées avec les différents seuils de température prédéterminés, et prend pour exemple d'illustration la boucle basse température de la figure 2. Le premier groupe d'équipement comprend alors la machine électrique de traction 54, avec ses trois seuils S11 (premier seuil de température), S12 (deuxième seuil de température), S13 (troisième seuil de température), le convertisseur de courant 101, et sa température instantanée t₂₀₁. Le premier groupe d'équipement comprend en outre le convertisseur de courant 101, avec, par analogie au précédent équipement, ses trois seuils S21, S22, S23 et sa température instantanée t₂₀₂. La machine électrique de traction 54 et le convertisseur de courant 101 sont traversés par le même fluide caloporteur dont le débit instantané est noté par la référence D, et le débit maximal par la référence Dₘₐₓ. Ce débit est produit par la pompe de circulation 64. Les autres équipements du premier groupe d'équipements ne sont pas pris en compte, mais à partir de ce simple exemple il serait évident de les rajouter, ou pas, selon qu'ils nécessitent une surveillance de leur température, ou pas. De même, des combinaisons sont possibles avec les boucles haute température et très basse température.

Le second équipement considéré ici, est le système de volets obturateurs 1, susceptible d'être défaillant. Les autres équipements du deuxième groupe d'équipements ne sont pas pris en compte, mais à partir de ce simple exemple il serait évident de les rajouter, ou pas, selon que leur défaillance dégrade le refroidissement du premier groupe d'équipements ou pas. De même, des combinaisons sont possibles avec les boucles haute température et très basse température.

Ainsi le premier chronogramme représente la température instantanée t₂₀₂ du convertisseur de courant 101, le deuxième chronogramme la température instantanée t₂₀₁ de la machine motrice 54, et le troisième chronogramme le débit du fluide caloporteur de la pompe de circulation 64. L'axe des abscisses est bien entendu le temps, sur lequel les instants remarquables sont repérés par t₀, t₁, t₂, t₃, t₄, t₅, t₆, t₇ pour les trois chronogrammes.

Le cas présenté ici est un véhicule qui démarre à froid, c'est-à-dire qu'à l'origine des chronogrammes, toutes les températures instantanées sont à une température ambiante, ici 0°C.

Entre l'origine et t₁, il n'y a pas de défaillance du système de volets 1 détectée. A partir de t₁, le procédé a détecté la défaillance du système de volets 1, et elle est permanente. On n'a pas considéré ici l'application de la variante avec la temporisation 300, car cette variante ne présente pas de difficulté particulière. Elle est donc considérée ici comme d'une valeur de 0 secondes.

A l'instant t₀, la machine électrique 54 atteint son premier seuil de température S11, mais l'étape de surveillance n'est pas déclenchée car il n'y a pas encore de défaillance de détectée.

A l'instant t₁, la défaillance est détectée et donc l'étape de surveillance est déclenchée, mais la machine électrique 54 et le convertisseur 101 sont tous les deux sous leur deuxième seuil respectif S11 et S21, la pompe de circulation 64 continue donc à être régulée en fonction des températures instantanées et des températures cibles.

A l'instant t₂, la température t₂₀₂ du convertisseur de courant 101 dépasse son premier seuil de température S21, mais reste sous son deuxième seuil de température S22, l'étape de surveillance est toujours active mais la pompe de circulation 64 n'est pas encore commandée à son débit maximal Dₘₐₓ, jusqu'à l'instant t₃.

A l'instant t₃, la température t₂₀₂ du convertisseur de courant 101 atteint ou dépasse son deuxième seuil de température S22, et bien que la machine électrique 54 soit encore sous son deuxième seuil S12, le procédé va alors commander la pompe de circulation 64 à son débit maximal Dₘₐₓ jusqu'à ce que la température t₂₀₂ du convertisseur de courant 101 repasse sous son troisième seuil S23 à l'instant t₄.

Entre t₄ et t₆, l'étape de surveillance est toujours active car la détection de la défaillance du système de volets 1 est toujours présente, comme précédemment indiqué. Mais les deux températures t₂₀₁, t₂₀₂ restent sous leur deuxième seuil respectif S12 et S22, si bien que la pompe de circulation 64 est revenue dans son mode de débit régulé en fonction des températures instantanées et des températures cibles, si bien qu'à l'instant t₅ la pompe de circulation 64 continue sa régulation du débit D.

A l'instant t₆, c'est la machine motrice 54 qui, à son tour, dépasse son deuxième seuil de température S12. Le procédé commande alors à nouveau la pompe de circulation à son débit maximal Dₘₐₓ jusqu'à ce que la température instantanée t₂₀₁ de la machine électrique 54 atteigne son troisième seuil S13, et ainsi de suite.

Pour un convertisseur de courant ou une machine motrice électrique, le premier seuil S11, S21, sont de l'ordre de 80°C, notamment entre 75 et 85 °C. Les seuils S12 et S22 sont alors de l'ordre de 90°C, notamment entre86°C et 100 °C, et les seuils S13 et S23 de l'ordre de 60°C. Les températures cibles T201 etT202 de tels équipements sont par exemple de 70 °C.

Sur la figure 4, les températures cibles T201 et T202 sont représentées respectivement égales au premiers seuils S11 et S21, mais selon les contraintes de fonctionnement particulières, les températures cibles T201 et T202 sont entre les premiers et troisièmes seuils respectifs, ou encore inférieures à ces troisièmes seuils respectifs. Dans tous les cas, toutes ces températures cibles sont inférieures ou égales aux premiers seuils respectifs.

## Revendications

1. Procédé de refroidissement par un fluide caloporteur pour un premier équipement (2, 6, 50, 52, 54, 100, 101, 102) d'un véhicule automobile, ce procédé régulant le débit (D) du fluide caloporteur d'un système thermique comprenant un second équipement de commande de ce refroidissement (1, 3, 4, 7, 12, 14, 22, 30, 56, 62, 64), ce procédé comportant une étape (201, 202, 203, 204) de détermination d'une température instantanée (t₂₀₁, t₂₀₂, t₂₀₃, t₂₀₄) du premier équipement (2, 6, 50, 52, 54, 100, 101, 102), et une étape de régulation du débit (D) du fluide caloporteur en fonction de la température instantanée (t₂₀₁, t₂₀₂, t₂₀₃, t₂₀₄) lorsqu'elle est inférieure à un premier seuil prédéterminé (S11, S12, S14, S14) fonction du premier équipement (2, 6, 50, 52, 54, 100, 101, 102), et une étape de détection d'une défaillance (200) du second équipement (1, 3, 4, 7, 12, 14, 22, 30, 56, 62, 64), **caractérisé en ce que** en cas de détection de la défaillance, le procédé comprend une étape de surveillance (601) de la température instantanée (t₂₀₁, t₂₀₂, t₂₀₃, t₂₀₄) qui, si elle dépasse un second seuil prédéterminé (S21, S22, S23, S24) supérieur au premier seuil (S11, S12, S14, S14), commande le débit (D) du fluide à son maximum (Dₘₐₓ) jusqu'à ce que la température instantanée (t₂₀₁, t₂₀₂, t₂₀₃, t₂₀₄) descende sous un troisième seuil prédéterminé (S31, S32, S33, S34) inférieur au premier seuil (S11, S12, S14, S14).

2. Procédé de refroidissement selon la revendication 1, **caractérisé en ce que** le premier équipement (2, 6, 50, 52, 54, 100, 101, 102) est un équipement parmi un premier groupe d'équipements à refroidir, et **en ce que** le second équipement (1, 3, 4, 7, 12, 14, 22, 30, 56, 62, 64) est un équipement parmi un second groupe d'équipements de commande de refroidissement.

3. Procédé de refroidissement selon la revendication 2, **caractérisé en ce que** l'étape (201, 202, 203, 204) de détermination de la température instantanée (t₂₀₁, t₂₀₂, t₂₀₃, t₂₀₄) du premier équipement (2, 6, 50, 52, 54, 100, 101, 102) est réalisée pour chaque équipement du premier groupe, le procédé déterminant les trois seuils de température pour chaque premier équipement, l'étape de détection de la défaillance (200) du second équipement (1, 3, 4, 7, 12, 14, 22, 30, 56, 62, 64) étant réalisée pour chaque équipement du second groupe, la détection de la défaillance de l'un des équipements du second groupe déclenchant l'étape de surveillance (601) pour chacun des équipements du premier groupe.

4. Procédé selon la revendication 2 ou 3, le véhicule comprenant un système de motricité électrique du véhicule, **caractérisé en ce que** le premier groupe d'équipement comprend un équipement de puissance du système de motricité électrique (2, 50, 52, 54, 100, 101, 102).

5. Procédé de refroidissement selon l'une des revendications précédentes, **caractérisé en ce que** le véhicule est un véhicule hybride comprenant une machine motrice thermique.

6. Procédé de refroidissement selon l'une des revendications précédentes, **caractérisé en ce que** le premier équipement est un équipement de puissance parmi une machine électrique motrice (54) du véhicule, un convertisseur de courant (101) ou onduleur (100, 102, 52) pour cette machine motrice électrique (54), un stockeur d'énergie électrique (2) pour cette machine motrice électrique (54), un chargeur embarqué (50) pour cette batterie (2), une transmission ou réducteur ou boîte de vitesses pour cette machine électrique (54).

7. Procédé de refroidissement selon l'une des revendications précédentes, **caractérisé en ce que** le second équipement est un équipement de commande de refroidissement parmi une pompe de circulation du fluide caloporteur (12, 30, 64), un groupe moto-ventilateur d'air de refroidissement d'un échangeur air-fluide caloporteur (7), des volets régulant le débit de l'air de refroidissement (1), un capteur de température (14, 22, 62, ), une vanne de commande (4, 56) du fluide caloporteur.

8. Calculateur **caractérisé en ce qu'**il comprend les moyens d'acquisition, de traitement par instructions logicielles stockées dans une mémoire ainsi que les moyens de commande requis à mise en oeuvre du procédé selon l'une quelconque des revendications précédentes.

9. Véhicule hybride comprenant :
- un système de motricité électrique du véhicule comprenant un premier équipement de puissance à refroidir (2, 50, 52, 54, 100, 101, 102),
- système thermique contenant un fluide caloporteur refroidissant le premier équipement (2, 50, 52, 54, 100, 101, 102), ce système thermique comprenant un second équipement de commande de ce refroidissement (1, 3, 4, 7, 12, 14, 22, 30, 56, 62, 64),
- un calculateur,
**caractérisé en ce que** le calculateur comprend les moyens d'acquisition, de traitement par instructions logicielles stockées dans une mémoire ainsi que les moyens de commande requis à mise en oeuvre du procédé selon l'une quelconque des revendications 1 à 7.

10. Véhicule selon la revendication 9, le calculateur étant un ensemble de plusieurs calculateurs de contrôle comprenant un premier calculateur de contrôle contrôlant le système de motricité électrique, un deuxième calculateur contrôlant le refroidissement, **caractérisé en ce que** les instructions logicielles pour la mise en oeuvre de l'étape de détection de la défaillance du second équipement sont stockées dans la mémoire du deuxième calculateur de contrôle, et les instructions logicielles pour la mise en oeuvre de l'étape de de surveillance de la température instantanée du premier équipement sont stockées dans la mémoire du premier calculateur de contrôle.

## Patentansprüche

1. Kühlprozess mit einer Wärmeträgerflüssigkeit für ein erstes Gerät (2, 6, 50, 52, 54, 100, 101, 102) eines Kraftfahrzeugs, wobei dieser Prozess den Durchfluss (D) der Wärmeträgerflüssigkeit reguliert ein thermisches System, das zweite Geräte zur Steuerung dieser Kühlung umfasst (1, 3, 4, 7, 12, 14, 22, 30, 56, 62, 64), dieses Verfahren umfassend einen Schritt (201, 202, 203, 204) des Bestimmens einer momentanen Temperatur (t201, t202, t203, boa) der ersten Ausrüstung (2, 6, 50, 52, 54, 100, 101, 102) und a Schritt des Regulierens der Durchflussrate (D) des Wärmeübertragungsfluids als Funktion der momentanen Temperatur (t201, t202, t203, t204), wenn diese niedriger als ein erster vorgegebener Schwellenwert (S11, S12, S14, S14) ist der ersten Ausrüstung (2, 6, 50, 52, 54, 100, 101, 102) und einen Schritt zum Erkennen eines Fehlers (200) der zweiten Ausrüstung (1, 3, 4, 7, 12, 14, 22, 30, 56, 62, 64), **dadurch gekennzeichnet, dass** das Verfahren im Falle der Erkennung des Fehlers einen Schritt des Überwachens (601) der momentanen Temperatur (t201, t202, t203, t204) umfasst, die, wenn sie eine Sekunde überschreitet Der vorgegebene Schwellenwert (S21, S22, S23, S24), der größer als der erste Schwellenwert (S11, S12, S14, S14) ist, regelt den Durchfluss (D) des Fluids auf sein Maximum (Dm"), bis die momentane Temperatur a201, t202 erreicht ist, -03, t204) unter einen dritten vorgegebenen Schwellenwert (S31, S32, S33, S34) fällt, der niedriger als der erste Schwellenwert (S11, S12, S14, S14) ist.

2. Kühlverfahren nach Anspruch 1, **dadurch gekennzeichnet, dass** das erste Gerät (2, 6, 50, 52, 54, 100, 101, 102) zu einer ersten Gruppe von zu kühlenden Geräten gehört und dass das zweite Gerät (1, 3, 4, 7, 12, 14, 22, 30, 56, 62, 64) gehört zu einer zweiten Gruppe von Kühlkontrollgeräten.

3. Kühlverfahren nach Anspruch 2, **dadurch gekennzeichnet, dass** der Schritt (201, 202, 203, 204) des Bestimmens der momentanen Temperatur (t₂₀₁, t₂₀₂, t₂₀₃, t₂₀₄) der ersten Ausrüstung (2, 6, 50, 52, 54, 100, 101, 102) für jedes Gerät der ersten Gruppe durchgeführt wird, wobei das Verfahren die drei Temperaturschwellen für jedes erste Gerät ermittelt, der Schritt der Erkennung des Ausfalls (200) des zweiten Geräts (1, 3, 4, 7, 12, 14, 22, 30, 56, 62, 64) für jedes Gerät der zweiten Gruppe die Erkennung des Ausfalls eines der Geräte der zweiten Gruppe durchgeführt wird Auslösen des Überwachungsschritts (601) für jedes der Geräte in der ersten Gruppe.

4. Verfahren nach Anspruch 2 oder 3, wobei das Fahrzeug ein elektrisches Antriebssystem des Fahrzeugs umfasst, **dadurch gekennzeichnet, dass** die erste Ausrüstungsgruppe Leistungsausrüstung des elektrischen Antriebssystems (2, 50, 52, 54, 100, 101, 102) umfasst..

5. Kühlverfahren nach einem der vorhergehenden Ansprüche, **dadurch gekennzeichnet, dass** das Fahrzeug ein Hybridfahrzeug mit einem Wärmemotor ist.

6. Kühlverfahren nach einem der vorhergehenden Ansprüche, **dadurch gekennzeichnet, dass** es sich bei der ersten Ausrüstung um eine Leistungsausrüstung unter einer elektrischen Antriebsmaschine (54) des Fahrzeugs, einem Stromwandler (101) oder Wechselrichter (100, 102, 52) für diesen elektrischen Antrieb handelt Maschine (54), einen elektrischen Energiespeicher (2) für diese elektrische Antriebsmaschine (54), ein Bordladegerät (50) für diese Batterie (2), ein Getriebe bzw. Untersetzungsgetriebe für diese elektrische Maschine (54).

7. Kühlverfahren nach einem der vorhergehenden Ansprüche, **dadurch gekennzeichnet, dass** es sich bei der zweiten Ausrüstung um eine Kühlsteuerausrüstung handelt, darunter eine Umwälzpumpe (12, 30, 64) für die Wärmeübertragungsflüssigkeit, eine Luftmotor-Gebläsegruppe zur Kühlung eines Luft-Wärmeübertragungsflüssigkeitsaustauschers (7), Klappen zur Regulierung des Kühlluftstroms (1), ein Temperatursensor (14, 22, 62), ein Steuerventil (4, 56) für die Wärmeübertragungsflüssigkeit.

8. Computer, **dadurch gekennzeichnet, dass** er die Mittel zur Erfassung und Verarbeitung durch in einem Speicher gespeicherte Softwareanweisungen sowie die Steuermittel umfasst, die zur Implementierung des Verfahrens nach einem der vorhergehenden Ansprüche erforderlich sind.

9. Hybridfahrzeug inklusive:
- ein elektrisches Antriebssystem des Fahrzeugs, umfassend ein erstes zu kühlendes Leistungsgerät (2, 50, 52, 54, 100, 101, 102),
- Wärmesystem, das eine Wärmeübertragungsflüssigkeit enthält, die die ersten Geräte (2, 50, 52, 54, 100, 101, 102) kühlt, wobei dieses Wärmesystem zweite Geräte zur Steuerung dieser Kühlung (1, 3, 4, 7, 12, 14) umfasst, 22, 30, 56, 62, 64),
- einen Computer, **dadurch gekennzeichnet, dass** der Computer die Mittel zur Erfassung, Verarbeitung durch in einem Speicher gespeicherte Softwareanweisungen sowie die zur Durchführung des Verfahrens nach einem der Ansprüche 1 bis 7 erforderlichen Steuermittel umfasst.

10. Fahrzeug nach Anspruch 9, wobei der Computer ein Satz aus mehreren Steuercomputern ist, umfassend einen ersten Steuercomputer, der das elektrische Antriebssystem steuert, und einen zweiten Computer, der die Kühlung steuert, **dadurch gekennzeichnet, dass** die Softwareanweisungen zum Implementieren des Schritts des Erkennens des Ausfalls des Das zweite Gerät ist im Speicher des zweiten Steuerrechners gespeichert, und die Softwareanweisungen zum Implementieren des Schritts der Überwachung der momentanen Temperatur des ersten Geräts sind im Speicher des ersten Steuerrechners gespeichert.

## Claims

1. Cooling process using a heat transfer fluid for a first piece of equipment (2, 6, 50, 52, 54, 100, 101, 102) of a motor vehicle, this process regulating the flow rate (D) of the heat transfer fluid of a thermal system comprising second equipment for controlling this cooling (1, 3, 4, 7, 12, 14, 22, 30, 56, 62, 64), this method comprising a step (201, 202, 203, 204) of determining an instantaneous temperature (t201, t202, t203, boa) of the first equipment (2, 6, 50, 52, 54, 100, 101, 102), and a step of regulating the flow rate (D) of the heat transfer fluid as a function of the instantaneous temperature (t201, t202, t203, t204) when it is lower than a first predetermined threshold (S11, S12, S14, S14) function of the first equipment (2, 6, 50, 52, 54, 100, 101, 102), and a step of detecting a failure (200) of the second equipment (1, 3, 4, 7, 12, 14, 22, 30, 56, 62, 64), **characterized in that** in the event of detection of the failure, the method comprises a step of monitoring (601) the instantaneous temperature (t201, t202, t203, t204) which, if it exceeds a second threshold predetermined (S21, S22, S23, S24) greater than the first threshold (S11, S12, S14, S14), controls the flow rate (D) of the fluid to its maximum (Dm") until the instantaneous temperature a201, t202 , -03, t204) drops below a third predetermined threshold (S31, S32, S33, S34) lower than the first threshold (S11, S12, S14, S14).

2. Cooling method according to claim 1, **characterized in that** the first equipment (2, 6, 50, 52, 54, 100, 101, 102) is one of a first group of equipment to be cooled, and **in that** the second equipment (1, 3, 4, 7, 12, 14, 22, 30, 56, 62, 64) is one of a second group of cooling control equipment.

3. Cooling method according to claim 2, **characterized in that** the step (201, 202, 203, 204) of determining the instantaneous temperature (t₂₀₁, t₂₀₂, t₂₀₃, t₂₀₄) of the first equipment (2, 6, 50, 52 , 54, 100, 101, 102) is carried out for each piece of equipment in the first group, the method determining the three temperature thresholds for each first piece of equipment, the step of detecting the failure (200) of the second piece of equipment (1, 3, 4, 7, 12, 14, 22, 30, 56, 62, 64) being carried out for each piece of equipment in the second group, the detection of the failure of one of the pieces of equipment in the second group triggering the monitoring step (601) for each of the equipment in the first group.

4. Method according to claim 2 or 3, the vehicle comprising an electric drive system of the vehicle, **characterized in that** the first group of equipment comprises power equipment of the electric drive system (2, 50, 52, 54, 100, 101, 102).

5. Cooling method according to one of the preceding claims, **characterized in that** the vehicle is a hybrid vehicle comprising a thermal engine.

6. Cooling method according to one of the preceding claims, **characterized in that** the first equipment is power equipment among an electric driving machine (54) of the vehicle, a current converter (101) or inverter (100, 102, 52) for this electric driving machine (54), an electric energy store (2) for this electric driving machine (54), an on-board charger (50) for this battery (2), a transmission or reducer or gearbox for this electric machine (54).

7. Cooling method according to one of the preceding claims, **characterized in that** the second equipment is cooling control equipment among a heat transfer fluid circulation pump (12, 30, 64), an air motor-fan group cooling of an air-heat transfer fluid exchanger (7), shutters regulating the flow of cooling air (1), a temperature sensor (14, 22, 62,), a control valve (4, 56) heat transfer fluid.

8. Computer **characterized in that** it comprises the means of acquisition, processing by software instructions stored in a memory as well as the control means required to implement the method according to any one of the preceding claims.

9. Hybrid vehicle including:
- an electric drive system of the vehicle comprising a first power equipment to be cooled (2, 50, 52, 54, 100, 101, 102),
- thermal system containing a heat transfer fluid cooling the first equipment (2, 50, 52, 54, 100, 101, 102), this thermal system comprising second equipment for controlling this cooling (1, 3, 4, 7, 12, 14, 22, 30, 56, 62, 64),
- a computer, **characterized in that** the computer comprises the means of acquisition, processing by software instructions stored in a memory as well as the control means required to implement the method according to any one of claims 1 to 7.

10. Vehicle according to claim 9, the computer being a set of several control computers comprising a first control computer controlling the electric drive system, a second computer controlling the cooling, **characterized in that** the software instructions for implementing the the step of detecting the failure of the second equipment is stored in the memory of the second control computer, and the software instructions for implementing the step of monitoring the instantaneous temperature of the first equipment are stored in the memory of the first control calculator.
